# EUROPÄISCHE PATENTANMELDUNG

(11) **EP 1 111 407 A2**
(43) Veröffentlichungstag der Anmeldung: **27.06.2001**
(21) Anmeldenummer: 00128123.7
(22) Anmeldetag: 22.12.2000
(51) Int. Cl.: G01T 1/105

(54) **Vorrichtung zum Auslesen von in einer Speicherschicht abgespeicherten Informationen und Röntgenkassette**

(30) Priorität: 23.12.1999 DE 19962775
(71) Anmelder: Agfa-Gevaert AG, 51373 Leverkusen (DE)
(72) Erfinder: Gebele, Herbert, 82054 Sauerlach (DE); Fasbender, Robert, Dr., 85521 Ottobrunn (DE); Lind, Martin, 80809 München (DE); Müller, Jürgen, 81545 München (DE); Reiser, Georg, Dr., 80337 München (DE)

(57) **Zusammenfassung**

Es wird eine Röntgenkassette (1) und eine Vorrichtung (10) zum Auslesen von in einer Speicherschicht (15) abgespeicherten Informationen vorgeschlagen. Diese Vorrichtung (10) enthält eine Strahlungsquelle (11) zum Anregen einer Zeile (34) der Speicherschicht (15). Aufgrund des Anregens emittiert die Zeile (34) eine Emissionsstrahlung (17). Die erfindungsgemäße Vorrichtung (10) enthält ein Empfangsmittel (12) zum Empfangen dieser Emissionsstrahlung (17). Das Empfangsmittel (12) weist eine Vielzahl von lichtempfindlichen Flächen (18) auf, die zeilenförmig nebeneinander angeordnet sind. Erfindungsgemäß sind die lichtempfindlichen Flächen (18) des Empfangsmittels (12) quer zur Richtung (A) der Zeile (34) größer als in Richtung (B) der Zeile (34). Alternativ oder zusätzlich kann die Vorrichtung ein optisches Abbildungsmittel (14) aufweisen, mit dem die Emissionsstrahlung (17) auf das Empfangsmittel (12) abgebildet wird. Die nummerische Apertur des Abbildungsmittels (14) - bezogen auf die angeregte Zeile (34) - ist quer zur Richtung (A) der Zeile (34) größer als in Richtung (B) der Zeile (34).

## Beschreibung

Die vorliegende Erfindung betrifft eine Vorrichtung zum Auslesen von in einer Speicherschicht abgespeicherten Informationen gemäß den Oberbegriffen des Anspruchs 1 und 3 sowie eine Röntgenkassette.

Insbesondere für medizinische Zwecke wird von einem Objekt, beispielsweise einem Patienten, mittels einer Röntgenstrahlung ein Bild erzeugt, das in einer Speicherschicht als latentes Bild abgespeichert wird. Als Speicherschicht wird dabei zumeist ein Phosphorträger verwendet. Zum Auslesen des in der Speicherschicht abgespeicherten Röntgenstrahlenbildes wird die Speicherschicht mittels einer Strahlungsquelle angeregt. Sie emittiert daraufhin aufgrund dieser Anregung Licht, das eine Intensität entsprechend des abgespeicherten Röntgenstrahlungsbildes aufweist. Das von der Speicherschicht ausgesandte Licht wird von einem Empfangsmittel empfangen und anschließend in elektrische Signale gewandelt, so dass das in der Speicherschicht abgespeicherte Röntgenstrahlungsbild anschließend sichtbar gemacht werden kann. Das Röntgenstrahlungsbild kann beispielsweise direkt auf einem Monitor dargestellt oder auch auf einen speziell für Röntgenbilder verwendbaren fotografischen Röntgenfilm geschrieben werden.

Eine solche Vorrichtung zum Auslesen von in einer Speicherschicht abgespeicherten Informationen ist beispielsweise aus der vorveröffentlichten Patentanmeldung WO 99/28765 bekannt. Bei dieser bekannten Vorrichtung wird die Speicherschicht zeilenweise durch eine Anregungsstrahlung angeregt, die von einer Strahlungsquelle erzeugt wird. Die Strahlungsquelle kann beispielsweise eine Laserdiodenzeile sein. Das aufgrund der Anregung von der Speicherschicht emittierte Licht wird von einem Empfangsmittel empfangen. Dazu weist dieses Empfangsmittel eine Vielzahl von lichtempfindlichen Flächen auf, die in einer Zeile nebeneinander angeordnet sind. Die von der Speicherschicht emittierte Strahlung wird von den lichtempfindlichen Flächen empfangen. Das Empfangsmittel kann eine Charge-Coupled-Device (CCD)-Zeile sein, die eine Vielzahl von zeilenweise nebeneinander angeordneten Fotodetektoren enthält. Diese lichtempfindlichen Flächen sind üblicherweise symmetrisch ausgestaltet. Aus der WO 99/28765 ist bekannt, dass die Größe der anregbaren Punkte auf der Speicherschicht abhängig ist von der Größe der lichtempfangenden Fläche der einzelnen Fotodetektoren des Empfangsmittels. Zur Gewährleistung einer großen Schärfe und einer großen Auflösung des aus der Speicherschicht ausgelesenen Röntgenstrahlenbildes soll die Größe der einzelnen Punkte klein gehalten werden. Dies ist insbesondere für Anwendungen in der Mammographie notwendig. Bei der bekannten Vorrichtung kann zwischen der Speicherschicht und dem Empfangsmittel ein Abbildungsmittel angebracht sein, mit dem die von der angeregten Zeile der Speicherschicht ausgesandte Emissionsstrahlung auf das Empfangsmittel abgebildet wird. Als Abbildungsmittel sollen sogenannte Selfoc-Linsen oder Mikrolinsen verwendet werden. Diese haben eine geringe Abmessung, so dass der Abstand zwischen der Speicherschicht und dem Empfangsmittel klein gehalten werden kann. Die optischen Eintrittsflächen sowohl der Selfoc- als auch der Mikrolinsen sind symmetrisch ausgebildet.

Ausgehend von der Lehre der WO 99/28765 liegt der vorliegenden Erfindung die Aufgabe zugrunde, eine verbesserte Qualität bei der Wiedergabe von in einer Speicherschicht abgespeicherten Informationen zu ermöglichen.

Diese Aufgabe wird gemäß der technischen Lehren des Anspruchs 1, des Anspruchs 3 oder des Anspruchs 9 gelöst.

Durch die vorliegende Erfindung wird eine gute Schärfe bei der Abbildung der von der Speicherschicht emittierten Emissionsstrahlung auf das Empfangsmittel und gleichzeitig eine hohe Sammeleffizienz beim Aufsammeln der von der Speicherschicht emittierten Strahlung erreicht. Gemäß der vorliegenden Erfindung werden die lichtempfindlichen Flächen des Empfangsmittels oder die Aperturwinkel, unter denen das Abbildungsmittel die von der Speicherschicht emittierte Strahlung auffängt, unsymmetrisch ausgestaltet. Der Erfindung liegt die überraschende Erkenntnis zugrunde, dass in Richtung der angeregten Zeile eine sehr gute Schärfe bei der Abbildung der Informationen auf das Empfangsmittel gewährleistet werden kann, und gleichzeitig quer zur Richtung der Zeile diese gute Schärfe beim Abbilden der Informationen auf das Empfangsmittel nicht notwendigerweise eingehalten werden muss. Bei der erfindungsgemäßen Ausgestaltung wird quer zur Richtung der Zeile die Menge - und damit die Intensität - der von dem Empfangsmittel empfangenen Emissionsstrahlung, im Vergleich zu einer symmetrischen Ausgestaltung, erhöht. Auf diese Weise wird ein verbesserter Signal-zu-Rauschabstand beim Empfangen der Informationen erreicht.

In einer besonders vorteilhaften Ausgestaltung der Erfindung sind sowohl die lichtempfindlichen Flächen des Empfangsmittels als auch die Öffnungswinkel des optischen Abbildungsmittels - bezogen auf die angeregte Zeile - unsymmetrisch ausgebildet. Auf diese Weise lassen sich die in der Speicherschicht abgespeicherten Informationen noch besser auf das Empfangsmittel abbilden. Die Wiedergabe dieser Informationen läßt sich daher qualitativ weiter verbessern.

In einer weiteren vorteilhaften Ausgestaltung der Erfindung sind die lichtempfindlichen Flächen des Empfangsmittels so ausgestaltet, dass sie quer zur Richtung der Zeile zwei- bis achtmal, insbesondere zwei- bis viermal, so groß sind als in Richtung der Zeile. Bei diesen Abmessungen läßt sich bei einer guten Schärfe der Abbildung der Informationen auf das Empfangsmittel ein optimierter Signal-zu-Rauschabstand erreichen.

Vorteilhafterweise kann das optische Abbildungsmittel so ausgestaltet sein, dass bei der Abbildung der Emissionsstrahlung auf das Empfangsmittel die Orientierung der ausgelesenen Informationen bei der Abbildung auf das Empfangsmittel in Richtung der Zeile die gleiche ist wie die Orientierung der abgespeicherten Informationen in der Speicherschicht. Auf diese Weise wird aufgrund geeigneter optischer Komponenten ein aufrechtes Bild der ausgelesenen Informationen bei dem Abbilden auf das Empfangsmittel gewährleistet. Es ist auch möglich, durch eine entsprechende elektronische Bilddatenverarbeitung und Verrechnung das aufrechte Bild bei der Abbildung zu erzeugen. Dies erfordert aber einen großen Rechenaufwand, der durch die Ausgestaltung des optischen Abbildungsmittels vermieden werden kann.

Weiterhin kann das optische Abbildungsmittel vorteilhafterweise ein Filter aufweisen, mit dem verhindert wird, dass Anregungsstrahlung, die zum Anregen der Speicherschicht dient, von dem Empfangsmittel empfangen wird. Die Qualität der Wiedergabe der abgespeicherten Information wird dadurch weiter verbessert. Ein Verzerren bei der Wiedergabe der Informationen aufgrund des Detektierens von Anregungsstrahlung durch das Empfangsmittel wird verhindert.

Weitere vorteilhafte Ausgestaltungen können den abhängigen Ansprüchen entnommen werden.

Im folgenden werden die Erfindung und ihre Vorteile anhand von Ausführungsbeispielen beschrieben.

Es zeigen:
- Fig. 1: eine schematische Darstellung eines Ausführungsbeispiels der erfindungsgemäßen Röntgenkassette,
- Fig. 2: ein Ausführungsbeispiel eines erfindungsgemäßen Lesekopfes zum Auslesen von in der Speicherschicht abgespeicherten Informationen,
- Fig. 3: eine Ansicht des Ausführungsbeispiels des erfndungsgemäßen Lesekopfes gemäß Fig. 2 mit einer unsymmetrischen Ausgestaltung der lichtempfindlichen Flächen des Empfangsmittels,
- Fig. 4: eine schematische Darstellung eines auf die lichtempfindlichen Flächen des Empfangsmittels abzubildenden Streukreises der Emissionsstrahlung,
- Fig. 5: eine weitere schematische Darstellung der erfindungsgemäßen Vorrichtung mit einem ersten Ausführungbeispiel des optischen Abbildungsmittels und
- Fig. 6: eine schematische Darstellung der erfindungsgemäßen Vorrichtung mit einem zweiten Ausführungsbeispiel des optischen Abbildungsmittels.

Im folgenden werden für gleiche und gleich wirkende Elemente gleiche Bezugszeichen verwendet.

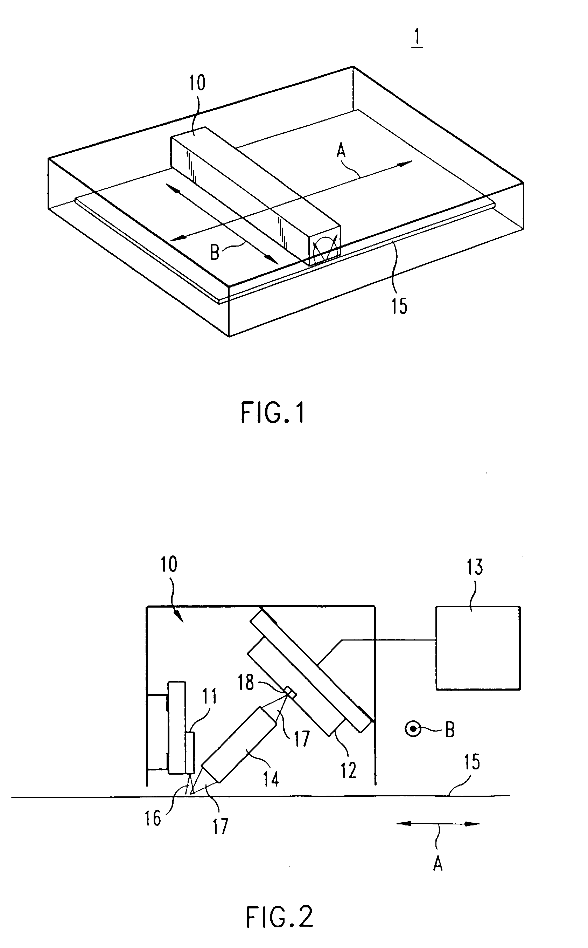

Fig. 1 zeigt eine perspektivische Ansicht einer Röntgenkassette 1, die eine Auslesevorrichtung gemäß der vorliegenden Erfindung in Form eines Lesekopfes 10 aufweist. Die Röntgenkassette 1 enthält eine Speicherschicht 15, die hier als Phosphorplatte ausgestaltet ist und eine ca. 300 µm dicke Schicht aus Phosphormaterial enthält. Dieses Phosphormaterial kann durch Röntgenbestrahlung in einen angeregten Zustand versetzt werden. Dadurch wird in der Phosphorplatte 15 ein Röntgenbild von einem Objekt abgespeichert. Die Phosphorplatte 15 ist durch Bestrahlen mit einer Anregungsstrahlung, die insbesondere im roten Wellenlängenbereich liegt, so stimulierbar, dass sie eine Emissionsstrahlung ausgibt, die insbesondere im blauen oder ultravioletten Wellenlängenbereich liegt. Die Menge (Intensität) der von der stimulierten Phosphorplatte 15 ausgegebenen Emissionsstrahlung ist ein Maß für die zuvor aufgenommene Menge an Röntgenstrahlung. Jeder Punkt der Phosphorplatte 15, der zum Ausgeben der Emissionsstrahlung angeregt wurde, gibt diese Emissionsstrahlung lambertstrahlenförmig aus. Die Phosphorplatte 15 stellt einen Lambert-Strahler dar. Ein solcher Lambert-Strahler emittiert Strahlung in alle Richtungen. Der Lesekopf 10 enthält eine Strahlungsquelle zum Ausgeben der Anregungsstrahlung, die zum Stimulieren der Phosphorplatte 15 benutzt wird. Des weiteren enthält der Lesekopf 10 ein Empfangsmittel zum Empfangen der von der Phosphorplatte 15 ausgegebenen Emissionsstrahlung. Die Strahlungsquelle und das Empfangsmittel sind in dem Lesekopf 10 fest miteinander verbunden. Der Lesekopf 10 erstreckt sich über die gesamte Breite der Phosphorplatte 15. Mittels des Lesekopfes 10 können die in einer Zeile der Phosphorplatte 15 abgespeicherten Informationen gleichzeitig ausgelesen werden. Die Zeile erstreckt sich im wesentlichen über die gesamte Breite der Phosphorplatte 15. Durch das Bezugszeichen B ist in der Fig. 1 die Zeilenrichtung angegeben. Der Lesekopf 10 ist durch einen in der Fig. 1 nicht dargestellten Antrieb quer zur Richtung der Zeile, d. h. in Längsrichtung der Phosphorplatte 15, entlang der Richtung des Pfeiles mit dem Bezugszeichen A verschiebbar. A gibt daher die Vorschubrichtung des Lesekopfes 10 quer zur Richtung der Zeile an.

Fig. 2 zeigt einen Schnitt durch den Lesekopf 10 quer zur Zeilenrichtung B. Die Fig. 2 zeigt innerhalb des Lesekopfes 10 eine Strahlungsquelle 11 zum Anregen einer Zeile der Phosphorplatte 15. Die Strahlungsquelle 11 ist hier eine Laserdiodenzeile. Die Laserdiodenzeile 11 ist so auf die Phosphorplatte 15 ausgerichtet, dass die von den einzelnen Laserdioden ausgesandte Strahlung direkt auf die Phosphorplatte 15 trifft. Zwischen der Laserdiodenzeile 11 und der Phosphorplatte 15 kann eine Optik vorgesehen sein, die zum Fokussieren der von der Laserdiodenzeile 11 ausgegebenen Anregungsstrahlung dient. Fig. 2 zeigt des weiteren ein Empfangsmittel 12 zum Empfangen der von der Phosphorplatte 15 ausgegebenen Emissionsstrahlung. Im vorliegenden Ausführungsbeispiel ist das Empfangsmittel 12 als CCD-Zeile ausgebildet. Die CCD-Zeile 12 enthält eine Vielzahl von parallel in einer Zeile nebeneinander angeordneten Fotodetektoren mit lichtempfindlichen Flächen 18. Die CCD-Zeile 12 führt eine fotoelektrische Wandlung der empfangenen Lichtstrahlung durch. Zwischen der Phosphorplatte 15 und der CCD-Zeile 12 ist ein Abbildungsmittel 14 angeordnet. Dieses Abbildungsmittel 14 dient zum Abbilden der von der angeregten Zeile der Phosphorplatte 15 emittierten Strahlung auf die lichtempfindlichen Flächen 18 der CCD-Zeile 12. Als Abbildungsmittel 14 können eine Vielzahl von zeilenförmig nebeneinander angeordneten Mikrolinsen verwendet werden. Die im Betrieb von der Laserdiodenzeile 11 ausgesandte Anregungsstrahlung ist in der Fig. 2 mit dem Bezugszeichen 16 versehen. Die aufgrund der Anregung mittels der Anregungsstrahlung 16 von der Phosphorplatte 15 emittierte Emissionsstrahlung ist in der Fig. 2 mit dem Bezugszeichen 17 versehen.

Die CCD-Zeile 12 ist an ihrem Ausgang mit einer Datenverarbeitungseinrichtung 13 verbunden. Diese Datenverarbeitungseinrichtung 13 hat die Aufgabe, die von der CCD-Zeile 12 erzeugten elektrischen Signale, die ein Abbild der in der Phosphorplatte 15 abgespeicherten Bildinformationen enthalten, auszuwerten und aufzubereiten. Darüber hinaus wird mittels der Datenverarbeitungseinrichtung 13 der Vorschub des Lesekopfes 10 über die Phosphorplatte 15 gesteuert.

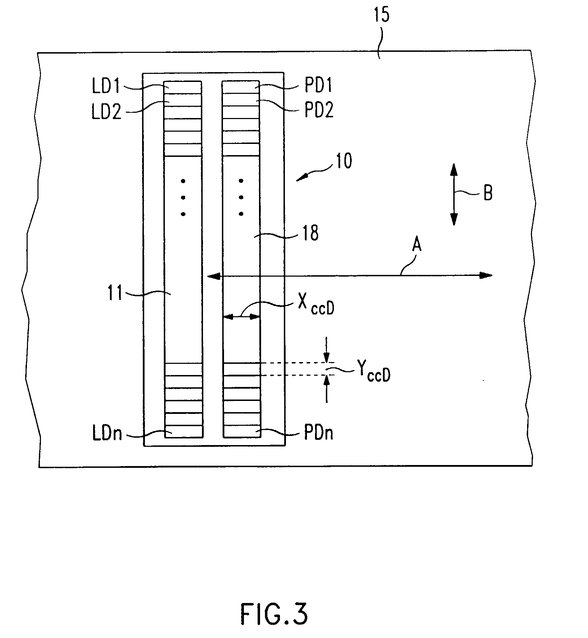

Fig. 3 zeigt eine weitere Ansicht des erfindungsgemäßen Lesekopfes 10 gemäß des Ausführungsbeispiels nach Fig. 2. Die Fig. 3 zeigt eine Draufsicht auf den erfindungsgemäßen Lesekopf 10 und die Phosphorplatte 15. Es ist ein Schnitt durch die Laserdiodenzeile 11 und die CCD-Zeile 12 parallel zur Phosphorplatte 15 und der Vorschubrichtung A des Lesekopfes 10 dargestellt. Die Fig. 3 zeigt eine Vielzahl von in einer Zeile nebeneinander angeordneten Laserdioden LD1 bis LDn. Mittels der Laserdioden LD1 bis LDn kann die gesamte Breite der rechteckigen Phosphorplatte 15, in der Informationen abgespeichert sein können, zum Strahlen angeregt werden. In diesem Ausführungsbeispiel enthält die Laserdiodenzeile 11 4 096 Laserdioden. Es können aber ebenso weniger Laserdioden in der Laserdiodenzeile 11 vorhanden sein. Es ist möglich, die Laserstrahlen, die von den Laserdioden ausgegeben wird, über entsprechende Optiken zumindest teilweise zu überlagern, um so auch bei wenigen Laserdioden die gesamte Breite der Zeile anregen zu können.

Die Fig. 3 zeigt des weiteren die lichtempfindlichen Flächen 18 der CCD-Zeile 12 (Fig. 2). Die CCD-Zeile enthält Fotodetektoren PD1 bis PDn. Jeder Fotodetektor PD 1 bis PDn hat eine lichtempfindliche Fläche. Im vorliegenden Ausführungsbeispiel gemäß der Fig. 3 sind die lichtempfindlichen Flächen 18 der Fotodetektoren PD1 bis PDn jeweils unsymmetrisch ausgestaltet. Die einzelnen lichtempfindlichen Flächen 18 der Fotodetektoren PD1 bis PDn sind hier rechteckförmig ausgestaltet. Sie können aber auch z. B. elliptisch sein. In Zeilenrichtung B haben die einzelnen Fotodetektoren PD1 bis PDn lichtempfindliche Flächen mit einer Ausdehnung Y_{CCD} in Zeilenrichtung B und einer Ausdehnung X_{CCD} in Vorschubrichtung A, d. h. quer zur Zeilenrichtung B. Y_{CCD} ist kleiner als X_{CCD}. Vorteilhafterweise ist die Ausdehnung der jeweiligen lichtempfindlichen Flächen 18 quer zur Richtung der Zeile zwei- bis achtmal so groß wie die Ausdehnung in Richtung der Zeile. Die Ausdehnung Y_{CCD} beträgt hier etwa 150 µm und die Ausdehnung Xcco etwa 400 µm. Diese Ausdehnung X_{CCD} von etwa 400 µm ist besonders vorteilhaft, da sich bei diesem Maß ein sehr gutes Verhältnis von aufgesammelter Information zu CCD-Rauschen erreichen läßt. Der Lesekopf 10 enthält in den vorliegenden Ausführungsbeispielen 4 096 zeilenförmig nebeneinander angeordnete Fotodetektoren.

Durch die Bestrahlung der Phosphorplatte 15 mit Röntgenstrahlung, entstanden Speicherzentren innerhalb des Phosphors, in denen die auszulesenden Informationen abgespeichert sind. Aufgrund der Anregung durch die Laserdiodenzeile 11 wird in der Phosphorplatte 15 eine Vielzahl von nebeneinander befindlichen Streukreisen erzeugt, aus denen heraus Strahlung an der Oberfläche der Phosphorplatte 15 emittiert wird. Jeder Streukreis ist abhängig von der bestimmten Art der Phosphorplatte, insbesondere von der Korngröße, den Leuchtstoffpartikeln oder der Schichtdicke des für die Phosphorplatte 15 verwendeten Phosphors. Die Streukreise entstehen, da die von der Leuchtdiodenzeile 11 ausgesandte Anregungsstrahlung innerhalb der Phosphorplatte 15 aufgrund der spezifischen Beschaffenheit des verwendeten Phosphors gestreut wird. Die von den verschiedenen Speicherzentren aufgrund der Anregungsstrahlung emittierte Strahlung wird innerhalb ihres Weges von dem Speicherzentrum zur Außenfläche der Phosphorplatte 15 ebenfalls gestreut. Aufgrund dieser Streuungen entsteht beim Auslesen der in der Phosphorplatte 15 abgespeicherten Informationen eine Unschärfe. Diese Unschärfe ist spezifisch für die Art des verwendeten Phosphors. Durch diese Unschärfe wird angegeben, daß die an einem Punkt der Phosphorplatte 15 enthaltenen Informationen nicht ortsgenau über diesem Punkt an der Oberfläche der Phosphorplatte 15 austreten. Vielmehr treten diese Informationen, die einem bestimmten Punkt der Phosphorplatte 15 zugeordnet sind, irgendwo innerhalb des diesem Punkt zugeordneten Streukreises an der Oberfläche der Phosphorplatte 15 aus. Da bei der vorliegenden Auslesevorrichtung eine Zeile der Phosphorplatte 15 gleichzeitig angeregt werden, erfolgt eine teilweise Überlagerung der Streukreise.

Die durch die Überlagerung der Streukreise, und damit der Informationen, erzeugte Unschärfe wird auf die zugeordneten Fotodetektoren der CCD-Zeile 12 abgebildet. Dadurch entstehen Auslesefehler. Für bestimmte medizinische Anwendungen werden bestimmte, maximal zulässige Unschärfen vorgegeben. Zur Gewährleistung einer vorgegebenen Schärfe werden die Ausdehnungen der lichtempfindlichen Flächen der Fotodetektoren in Zeilenrichtung B an diese vorgegebene Schärfe angepasst. Je kleiner die Ausdehnung der jeweiligen lichtempfindlichen Flächen der Fotodetektoren in Zeilenrichtung B, desto geringer ist die Unschärfe. Auf der anderen Seite wird durch die Größe der Abmessungen der lichtempfindlichen Flächen der Fotodetektoren ebenfalls die Menge der empfangbaren Strahlungsintensität, und damit der Sammeleffizienz, festgelegt. Je größer die lichtempfangende Fläche der jeweiligen Fotodetektoren ist, umso mehr Strahlung kann diese lichtempfindliche Fläche von einem angeregten Punkt auf der Phosphorplatte 15 empfangen.

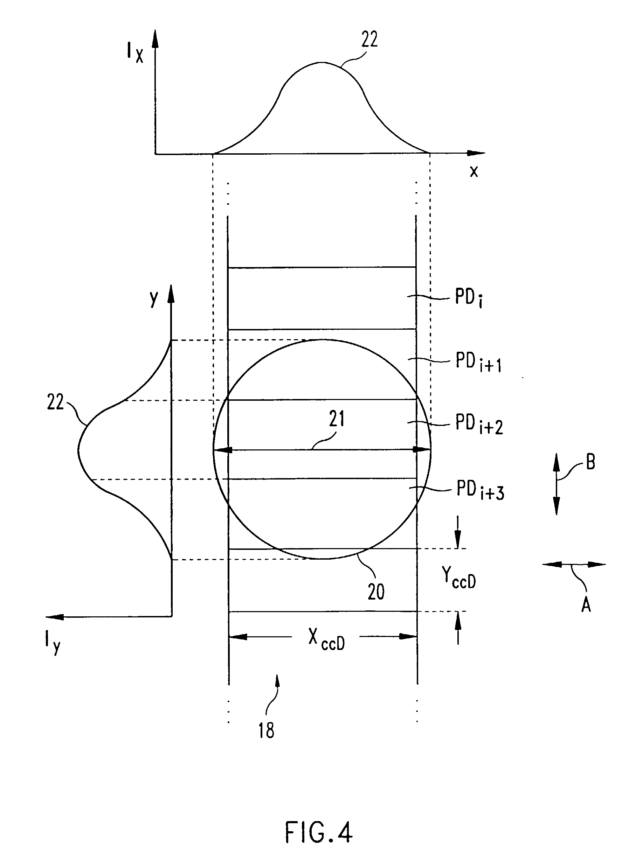

Fig. 4 zeigt ein Beispiel eines Streukreises 20, der bei einer punktförmigen Bestrahlung eines Phosphors aus der Oberfläche dieses Phosphors austritt, wenn der Phosphor zuvor mit einer gleichmäßig verteilten Röntgenstrahlung bestrahlt wurde, so dass homogen verteilte Informationen in dem Phosphor abgespeichert sind. Der Streukreis 20 weist einen Streukreisdurchmesser 21 auf. Die Verteilung der Intensität der innerhalb dieses Streukreises 20 austretenden Emissionsstrahlung ist sowohl in Richtung B der Zeile als auch quer zur Richtung A der Zeile gaußförmig. Dies wird veranschaulicht durch die im oberen und linken Bereich der Fig. 4 dargestellten Koordinatensysteme mit den darin dargestellten Kurven. Das Koordinatensystem im oberen Bereich der Fig. 4 zeigt den gaußförmigen Verlauf der Intensität der Emissionsstrahlung quer zur Richtung A der Zeile. Auf der Abszisse ist der jeweilige Ort x des Streukreises quer zur Richtung A der Zeile aufgetragen. Auf der Ordinate ist die Intensität Iₓ der Intensität der Emissionsstrahlung quer zur Richtung A der Zeile aufgezeichnet. Entsprechendes gilt für das Koordinatensystem im linken Bereich der Fig. 4. Auf der Abszisse ist der Ort y in Zeilenrichtung B aufgetragen, auf der Ordinate die Intensität I_{Y} der Emissionsstrahlung in Zeilenrichtung B. Aus dieser Darstellung läßt sich erkennen, dass eine besonders große Schärfe der Abbildung der Emissionsstrahlung, die innerhalb des Streukreises 20 ausgegeben wird, dann erreicht wird, wenn die Ausdehnung der lichtempfangenden Flächen der Fotodetektoren möglichst klein ist.

Fig. 4 zeigt des weiteren einen Teil der CCD-Zeile 12 mit mehreren, nebeneinander angeordneten Fotodetektoren PDᵢ bis PDᵢ₊₃. Der durch die Punktbestrahlung des Phosphors entstehende Streukreis 20 soll hier auf die Fotodetektoren der CCD-Zeile abgebildet werden. Dies ist schematisch in der Fig. 4 dargestellt, indem der Streukreis 20 in die Anordnung der Fotodetektoren eingezeichnet ist. Der Streukreis 20 erstreckt sich in dem Beispiel gemäß der Fig. 4 im wesentlichen über die Fotodetektoren PDᵢ₊₁ bis PDᵢ₊₃. Die lichtempfindlichen Flächen 18 der dargestellten Fotodetektoren weisen jeweils in Zeilenrichtung B eine Ausdehnung Y_{CCD} und quer zur Zeilenrichtung A eine Ausdehnung von X_{CCD} auf. Y_{CCD} ist dabei kleiner als X_{CCD}. Die lichtempfindlichen Flächen der Fotodetektoren sind daher unsymmetrisch ausgestaltet und weisen eine rechteckige Fläche auf. Es ist ebenso möglich, die lichtempfindlichen Flächen der Fotodetektoren auf andere Weise unsymmetrisch, z. B. elliptisch, auszugestalten.

Wie die Fig. 4 zeigt, wird der größte Teil der Intensität der innerhalb des Streukreises 20 in Zeilenrichtung B emittierten Strahlung durch die lichtempfindliche Fläche des Fotodetektors PDᵢ₊₂ empfangen. Aufgrund der gaußförmigen Verteilung der Intensität der Emissionsstrahlung wird von den dem Fotodetektor PDᵢ₊₂ benachbarten Fotodetektoren PDᵢ₊₁ und PDᵢ₊₃ eine wesentlich geringere Intensität von in Zeilenrichtung B emittierter Strahlung empfangen.

Fig. 4 zeigt, dass - quer zur Zeilenrichtung A betrachtet - aufgrund der Ausdehnung X_{CCD} der lichtempfindlichen Flächen der Fotodetektoren die gaußverteilte Intensität des Streukreises 20 im wesentlichen vollständig von den lichtempfindlichen Flächen empfangen wird. Der Streukreis 20 hat einen Streukreisdurchmesser 21, der nur unwesentlich größer ist als die Länge X_{CCD} der lichtempfindlichen Flächen 18 der Fotodetektoren. Auf diese Weise kann eine hohe Sammeleffizienz beim Sammeln der von der Phosphorplatte ausgegebenen Emissionsstrahlung in Richtung quer zur Zeile gewährleistet werden. Auf eine besonders gute Schärfe bei der Abbildung der Emissionsstrahlung quer zur Richtung der Zeile wird erfindungsgemäß verzichtet. Beim zeilenweisen Anregen der Phosphorplatte und beim zeilenweisen Empfangen der Emissionsstrahlung werden - quer zur Richtung der Zeile betrachtet - ausschließlich Streukreise eines einzigen Punktes erfasst.

Aufgrund des Rauschens eines jeden Fotodetektors ist es vorteilhaft, die Ausdehnung X_{CCD} die lichtempfindlichen Flächen der Fotodetektoren kürzer zu machen, als den Streukreisdurchmesser 21. Wie man anhand der gaußförmigen Intensitätsverteilung in dem Koordinatensystem des oberen Bereichs der Fig. 4 erkennen kann, ist die Menge an Intensität der Emissionsstrahlung, die von dem Streukreis 20 quer zur Richtung derZeile ausgegeben wird und über die Ausdehnung X_{CCD} der lichtempfindlichen Flächen 18 hinausgeht, sehr gering. Da das Rauschen eines jeden Fotodetektors abhängig ist von der Größe der lichtempfindlichen Fläche, würde eine weitergehende Vergrößerung der lichtempfindlichen Fläche über die Ausdehnung X_{CCD} hinaus nicht zu einer Verbesserung des Signal-zu-Rauschabstandes führen. Die Ausdehnung X_{CCD} der einzelnen lichtempfindlichen Flächen 18 ist daher vorteilhafterweise abhängig von ihrem jeweiligen Rauschen.

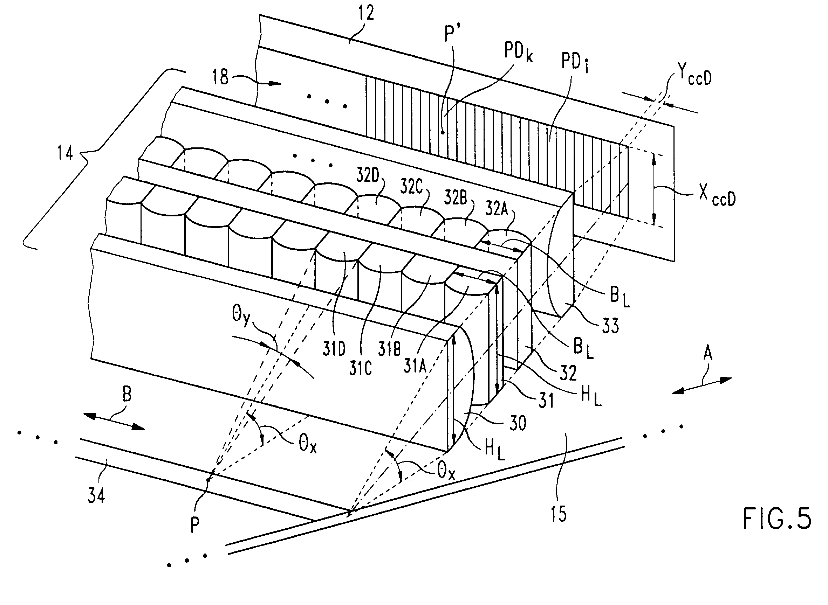

Fig. 5 zeigt ein weiteres Ausführungsbeispiel der erfindungsgemäßen Auslesevorrichtung, mit einer detaillierteren Darstellung des Abbildungsmittels 14 zum Abbilden der von der Phosphorplatte 15 ausgegebenen Emissionsstrahlung auf die lichtempfindlichen Flächen 18 der CCD-Zeile 12. Das Abbildungsmittel 14 gemäß des Ausführungsbeispiels der Fig. 5 enthält eine erste Sammellinse 30, die der Phosphorplatte 15 benachbart ist. Hinter dieser ersten Sammellinse 30 ist eine zweite Sammellinse 31 angeordnet. Diese Sammellinse 31 enthält eine Vielzahl von Linsenabschnitten 31A, 31B, ..., die im wesentlichen als Zylinderlinsen ausgestaltet sind und Zylinderachsen aufweisen, die senkrecht zur Zeilenrichtung B verlaufen. Die einzelnen Abschnitte 31A, 31B, ... der Sammellinse 31 haben jeweils in Zeilenrichtung B eine Breite B_{L}. Die Höhe der einzelnen Linsen 30, 31, 32 und 33 des Abbildungsmittels 14 beträgt senkrecht zur Zeilenrichtung B jeweils H_{L}. Hinter der zweiten Sammellinse 31 ist eine dritte Sammellinse 32 angeordnet, die - wie die zweite Sammellinse 31 - in einzelne Abschnitte 32A, 32B, ... unterteilt ist. Diese Abschnitte 32A, 32B, ... sind - wie bei der zweiten Sammellinse 31 - jeweils Zylinderlinsen, deren Zylinderachsen senkrecht zur Zeilenrichtung B verlaufen. Die dritte Sammellinse 32 ist dabei innerhalb des Abbildungsmittels 14 so angeordnet, dass sie spiegelbildlich zur zweiten Sammellinse 31 angeordnet ist, und zwar spiegelbildlich zu derjenigen Ebene, die parallel zu den Zylinderachsen der einzelnen Abschnitte 31A, 31B, ... verläuft. Hinter der dritten Sammellinse 32 ist eine vierte Sammellinse 33 angeordnet. Diese ist ebenfalls als Zylinderlinse ausgestaltet. Die Zylinderachse der vierten Sammellinse 33 verläuft in Zeilenrichtung B.

Das Abbildungsmittel 14 gemäß des Ausführungsbeispiels der Fig. 5 weist aufgrund der oben beschriebenen Ausgestaltung ein unsymmetrisches Öffnungsverhalten bezüglich der abzubildenden Zeile der angeregten Phosphorplatte 15 in Richtung A der Zeile und quer zur Richtung B der Zeile auf. Die Aperturwinkel des Abbildungsmittels 14 sind in Richtung der Zeile und quer zur Richtung der Zeile unterschiedlich. Der Aperturwinkel in Richtung der Zeile ist kleiner als derjenige quer zur Richtung der Zeile.

Fig. 5 zeigt eine Zeile 34 auf der Phosphorplatte 15, die durch die Laserdiodenzeile 11 zum Ausgeben einer Emissionsstrahlung angeregt wurde. Stellvertretend für alle Punkte der Zeile 34 ist in die Fig. 5 ein Punkt P eingezeichnet, der über das Abbildungsmittel 14 auf die lichtempfindliche Fläche des Fotodetektors PDₖ der CCD-Zeile 12 abgebildet wird. Die Abbildung des Punktes P der angeregten Zeile 34 ist in der Fig. 5 als Abbildungspunkt P' in den Fotodetektor PDₖ der CCD-Zeile 12 eingezeichnet. Zur Verdeutlichung der Erfindung sind in die Fig. 5 die Aperturwinkel (Öffnungswinkel) des Abbildungsmittels 14 eingezeichnet, mit denen die von dem Punkt P lambertstrahlenförmig ausgegebene Emissionsstrahlung in Richtung der Zeile B sowie quer zur Richtung der Zeile B auf den Fotodetektor PDₖ abgebildet werden. Der Aperturwinkel quer zur Richtung der Zeile wird im wesentlichen durch die erste Sammellinse 30 bestimmt. Er ist abhängig von der Höhe HL der ersten Sammellinse 30 und der Entfernung der angeregten Zeile von der ersten Sammellinse 30. Dadurch ergibt sich ein Aperturwinkel θ_{X} quer zur Richtung der Zeile.

Der Aperturwinkel in Zeilenrichtung B ist abhängig von der Breite BL der einzelnen Abschnitte 31A, 31B, ... der zweiten Sammellinse 31 und deren Entfernung zur Zeile. Im vorliegenden Ausführungsbeispiel gemäß der Fig. 5 wird die von dem Punkt P lambertstrahlenförmig ausgegebene Emissionsstrahlung aufgrund der Anordnung und Ausdehnung des Abschnitts 31D der zweiten Sammellinse 31 bestimmt. Der Aperturwinkel (Öffnungswinkel) in Zeilenrichtung B, mit dem die von dem Punkt P emittierte Strahlung zum Abbilden auf den Fotodetektor PDₖ erfaßt wird, beträgt gemäß dem Ausführungsbeispiel nach Fig. 5 θ_{Y}. Er wird bestimmt durch die Entfernung des Punktes P von der zweiten Sammellinse 31 und der Breite B_{L} des Abschnitts 31D.

Wie der Fig. 5 zu entnehmen ist, ist der Aperturwinkel θ_{X} größer als der Aperturwinkel θ_{Y}. Daraus ergibt sich, dass die nummerische Apertur des Abbildungsmittels 14 quer zur Richtung A der Zeile 34 größer ist als die nummerische Apertur des Abbildungsmittels 14 in Richtung B der Zeile 34. Die nummerische Apertur NA ergibt sich aus dem Sinus des halben Aperturwinkels: NA_{x,y} = n*sin(U_{x,y}). n entspricht dabei der Brechzahl des Stoffes vor dem Abbildungsmittel 14. Da dieser Stoff im vorliegenden Ausführungsbeispiel Luft ist, ist n=1. U_{x,y} entspricht der Hälfte der Öffnungswinkel θ_{X} bzw. θ_{Y}.

Vorteilhafterweise wird in den Abbildungsstrahlengang zum Abbilden von Strahlung auf die lichtempfindlichen Flächen 18 der CCD-Zeile 12 ein Filter eingesetzt, mit dem sich Strahlung herausfiltern läßt, die im Wellenlängenbereich der von der Laserdiodenzeile 11 emittierten Anregungsstrahlung liegt. Auf diese Weise wird vermieden dass Anregungsstrahlung von den Fotodetektoren der CCD-Zeile 12 empfangen wird. Das Filter kann zusätzlich ebenfalls so ausgestaltet sein, dass es eine von der Phosphorplatte 15 ausgegebene Fotolumineszenzstrahlung herausfiltert. Diese Fotolumineszenzstrahlung wird von der Phosphorplatte 15 unabhängig von den abgespeicherten Informationen emittiert. Es ist auch möglich, für die Fotolumineszenzstrahlung ein eigenes Filter, das entsprechend ausgestaltet ist, vorzusehen.

Vorteilhafterweise wird ein solches Filter zwischen dem Abbildungsmittel 14 und der CCD-Zeile 12 angeordnet. Das Abbildungsmittel 14 kann dann nahe an der Phosphorplatte 15 angeordnet werden. Auf diese Weise können sowohl in Richtung der Zeile als auch quer zur Richtung der Zeile große Öffnungswinkel zum Erfassen der von der angeregten Zeile 34 ausgegebenen Emissionsstrahlung erreicht werden. In einer weiteren, besonders vorteilhaften Ausgestaltung wird das Abbildungsmittel 14 oder eine seiner Linsenkomponenten aus einem Material hergestellt, das als Filter für die von der Laserdiodenzeile 11 ausgegebene Anregungsstrahlung und/oder die Fotolumineszenzstrahlung wirkt.

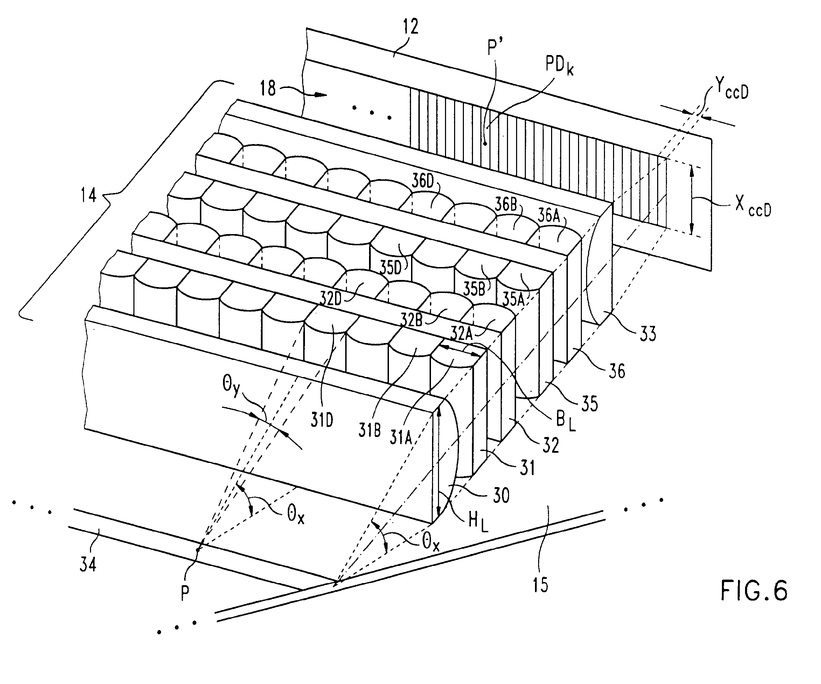

Fig. 6 zeigt ein weiteres Beispiel für die Ausgestaltung des Abbildungsmittels 14. Zusätzlich zu den vier Sammellinsen 30 - 33 gemäß der Fig. 5 weist das Abbildungsmittel 14 gemäß der Fig. 6 zwei weitere Sammellinsen auf. Zwischen der dritten Sammellinse 32 und der vierten Sammellinse 33 sind eine fünfte Sammellinse 35 und hinter dieser fünften Sammellinse 35 eine sechste Sammellinse 36 angeordnet. Diese beiden Sammellinsen 35 und 36 sind im wesentlichen so ausgestaltet, wie die zweite Sammellinse 31 bzw. die dritte Sammellinse 32. Die fünfte und sechste Sammellinse 35 und 36 weisen ebenfalls Abschnitte auf, die die Form von Zylinderlinsen haben. Die fünfte und sechste Linse dienen dazu, bei der Abbildung der aus der angeregten Zeile 34 ausgelesenen Informationen auf lichtempfindlichen Flächen der CCD-Zeile 12 ein "aufrechtes Bild" der Informationen zu erzeugen. Die Orientierung der Informationen in der Zeile 34 wird bei der Abbildung auf die lichtempfindlichen Flächen 18 in Richtung der Zeile B nicht verändert.

Das Abbildungsmittel 14 wird vorteilhafterweise durch Mikrolinsen realisiert. Diese können sehr kompakt hergestellt werden, so dass kleine Ausmaße bei der Realisierung des Lesekopfes und damit der Röntgenkassette gewährleistet werden können. Des weiteren haben sie ein geringes Gewicht. Solche Mikrolinsen können beispielsweise von der Firma LIMO-Lissotschenko Mikrooptik GmbH, Hauert 7, 44227 Dortmund, Deutschland, bezogen werden.

Vorteilhafterweise ist die Abbildung der von der angeregten Zeile 34 ausgegebenen Emissionsstrahlung eine Abbildung mit einem Maßstab von 1:1. Auf diese Weise kann eine optimale Lichtleistung der Emissionsstrahlung auf die Fotodetektoren der CCD-Zeile 12 abgebildet werden. Es ist allerdings ebenso möglich, eine Abbildung mit einem verkleinernden Abbildungsmaßstab durchzuführen. Dies gilt insbesondere für die Abbildung quer zur Richtung A der Zeile 34. Dadurch können bei entsprechender Ausgestaltung der lichtempfindlichen Flächen der Fotodetektoren weitere Punkte der angeregten Zeile 34 auf die lichtempfindliche Fläche abgebildet werden. Punkte, die bei einer 1:1-Abbildung durch das Abbildungsmittel 14 nicht mehr auf die lichtempfindlichen Flächen der jeweiligen Fotodetektoren abgebildet werden können, werden bei einem verkleinernden Abbildungsmaßstab von den lichtempfindlichen Flächen erfaßt.

## Patentansprüche

1. Vorrichtung zum Auslesen von in einer Speicherschicht (15) abgespeicherten Informationen mit
- einer Strahlungsquelle (11) zum Anregen einer Zeile (34) der Speicherschicht (15) mittels einer Anregungsstrahlung (16) und
- einem Empfangsmittel (12) zum Empfangen einer Emissionsstrahlung (17), die von der Speicherschicht (15) aufgrund des Anregens mittels der Anregungsstrahlung (16) ausgebbar ist, wobei das Empfangsmittel (12) eine Vielzahl von lichtempfindlichen Flächen (18) aufweist, die zeilenförmig nebeneinander angeordnet sind,
dadurch gekennzeichnet, dass die lichtempfindlichen Flächen (18) des Empfangsmittels (12) quer zur Richtung (A) der Zeile (34) eine größere Ausdehnung haben als in Richtung (B) der Zeile (34).

2. Vorrichtung nach Anspruch 1, dadurch gekennzeichnet, dass die Ausdehnung der lichtempfindlichen Flächen (18) quer zur Richtung (A) der Zeile (34) zwei- bis achtmal, insbesondere zwei- bis viermal, so groß ist als in Richtung (B) der Zeile (34).

3. Vorrichtung zum Auslesen von in einer Speicherschicht (15) abgespeicherten Informationen mit
- einer Strahlungsquelle (11) zum Anregen einer Zeile (34) der Speicherschicht (15) mittels einer Anregungsstrahlung,
- einem Empfangsmittel (12) zum Empfangen einer Emissionsstrahlung (17), die von der Speicherschicht (15) aufgrund des Anregens mittels der Anregungsstrahlung (16) ausgebbar ist, wobei das Empfangsmittel (12) eine Vielzahl von lichtempfindlichen Flächen (18) aufweist, die zeilenförmig nebeneinander angeordnet sind, und
- einem optischen Abbildungsmittel (14) zum Abbilden von von der Speicherschicht (15) ausgegebener Emissionsstrahlung (17) auf das Empfangsmittel (12), wobei das Abbildungsmittel (14) eine Vielzahl von zeilenförmig nebeneinander angeordneten Abbildungsabschnitten (31A, 31B, ..., 32A, 32B, ..., 35A, 35B, ..., 36A, 36B, ...) aufweist,
- **dadurch gekennzeichnet,** dass die Abbildungsabschnitte (31A, 31B, ..., 32A, 32B, ..., 35A, 35B, ..., 36A, 36B, ...), bezogen auf die angeregte Zeile (34) der Speicherschicht (15) quer zur Richtung (A) der Zeile (34) einen größeren Aperturwinkel aufweisen als in Richtung (B) der Zeile (34).

4. Vorrichtung nach Anspruch 3, dadurch gekennzeichnet, dass die lichtempfindlichen Flächen (18) des Empfangsmittels (12) quer zur Richtung (A) der Zeile (34) eine größere Ausdehnung haben als in Richtung (B) der Zeile (34).

5. Vorrichtung nach einem der Ansprüche 3 oder 4, dadurch gekennzeichnet, dass das optische Abbildungsmittel (14) quer zur Richtung (A) der Zeile (34) einen verkleinernden Abbildungsmaßstab aufweist.

6. Vorrichtung nach einem der Ansprüche 3 bis 5, dadurch gekennzeichnet, dass das optische Abbildungsmittel (14) quer zur Richtung (A) der Zeile (34) einen kleineren Abbildungsmaßstab aufweist als in Richtung (B) der Zeile (34).

7. Vorrichtung nach einem der Ansprüche 3 bis 6, dadurch gekennzeichnet, dass das optische Abbildungsmittel (14) so ausgestaltet ist, dass in Richtung (B) der angeregten Zeile (34) die aus der Speicherschicht ausgelesenen Informationen in derjenigen Orientierung auf das Empfangsmittel (12) abbildbar sind, in der sie in der angeregten Zeile (34) der Speicherschicht (15) abgespeichert sind.

8. Vorrichtung nach einem der Ansprüche 1 bis 7, dadurch gekennzeichnet, dass das optische Abbildungsmittel (14) ein Filter (33) umfaßt, das für die Anregungsstrahlung (16) undurchlässig ist.

9. Röntgenkassette (1) mit einer Speicherschicht (15) zum Abspeichern von Informationen und einer Vorrichtung nach einem der vorhergehenden Ansprüche 1 bis 8.
